# EUROPEAN PATENT APPLICATION

(11) **EP 1 231 443 A1**
(43) Date of publication of application: **14.08.2002**
(21) Application number: 02075541.9
(22) Date of filing: 11.02.2002
(51) Int. Cl.: F26B 25/00, F26B 17/00, B65G 69/04

(54) **A device comprising at least one bottom for bulk goods to be dried, as well as a method**

(30) Priority: 12.02.2001 NL 1017342
(71) Applicant: Holding Dinnissen B.V., 5971 DK Grubbenvorst (NL)
(72) Inventor: Maes, Mathieu Antoon Karel, 5971 DK Grubbenvorst (NL)
(74) Representative: Dorna, Peter

(57) **Abstract**

A device (1) provided with at least one chamber (4) comprising a bottom (3a) for bulk goods to be dried, in which said bottom is provided with means (6) for releasing and closing openings present in the bottom. The device furthermore comprises a bulk goods supplying device (8) for supplying bulk goods to the chamber (4) during operation. The bulk goods supplying device (8) comprises a plate (9) which is rotatable about a central axis (10). The plate (9) is furthermore rotatable about an axis of rotation (15) being spaced from said central axis (10) and extending parallel thereto. The bulk goods supplying device (8) furthermore comprises means (17) for depositing bulk goods on the plate.

## Description

The invention relates to a device comprising at least one bottom for bulk goods to be dried and a bulk goods supplying device for supplying bulk goods to the bottom during operation.

The invention furthermore relates to a method suitable for supplying bulk goods to a bottom.

With such a device and method known from German patent No 379.730, bulk goods are supplied to the device via an upper chamber and deposited on the bottom of said chamber. Air is passed through said chamber, causing the bulk goods that are present on the bottom of the chamber to dry. The bulk goods are subsequently passed through openings in the bottom and deposited on a bottom disposed thereunder. After the bulk goods have been dried in a number of chambers, the bulk goods are discharged through a funnel disposed near the bottom side of the device.

In the device as known from DE-379.730, the bulk goods are supplied to the first, upper chamber via a door. It will be understood that in this way an even distribution of the bulk goods over the bottom of the upper chamber cannot be obtained. Such an even distribution is desirable, however, in order to ensure a uniform drying of the bulk goods.

Consequently, it is an object of the invention to provide a device by means of which bulk goods to be deposited on a bottom can be evenly distributed over said bottom.

This objective is accomplished with the device according to the invention in that the bulk goods supplying device comprises a plate which is rotatable about a central axis, which plate is furthermore rotatable about an axis of rotation being spaced from said central axis and extending parallel thereto, which bulk goods supplying device furthermore comprises means for depositing bulk goods on said plate.

The bulk goods deposited on the plate will be flung off the plate as a result of the rotating movements of the plate about the central axis. Since the plate is rotated about the axis of rotation simultaneously with the means for depositing the bulk goods on the plate, the bulk goods that are flung off the plate are deposited at different locations on the bottom.

By controlling the rotational speeds of the plate about the central axis and about the axis of rotation, and also by controlling the directions of rotation, practically any desired distribution of the bulk goods over the bottom of a chamber or a conveyor belt can be realised.

The invention furthermore relates to a method which is characterised in that the bulk goods to be deposited on the bottom are deposited on a plate which is rotatable about the central axis, which plate is furthermore rotatable about an axis of rotation being spaced from said central axis and extending parallel thereto, wherein bulk goods present on the plate will be flung off the plate and be distributed over the bottom as a result of the rotation of the plate.

Such a method is in particular suitable for distributing bulk goods evenly over a bottom of a chamber or a conveyor belt. In addition to that, it is possible to realise other desired manners of distribution of bulk goods over a bottom by means of a method according to the invention.

The invention will be explained in more detail hereinafter with reference to the drawings, in which:
Figure 1 is a cross-sectional view of a drying device according to the invention;
Figure 2 is a top plan view of the device which is shown in Figure 1;
Figure 3 is a front view of the upper part of the device which is shown in Figure 1;
Figure 4 is a front view of a part of the bulk goods supplying device of the device according to the invention; and
Figures 5-7 show distribution patterns of bulk goods in a chamber when using the device according to the invention as shown in Figure 1.

In the figures, like parts are indicated by the same reference numerals.

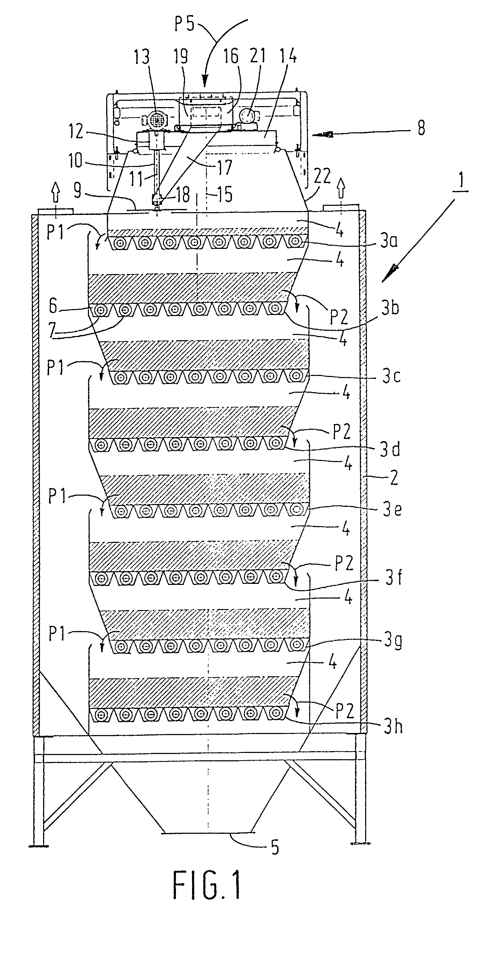

Figure 1 shows a device 1 according to the invention, which comprises a vertically extending cylinder 2, in which substantially horizontally extending bottoms 3a-3h are present. Chambers 4 are present between the bottoms 3a-3h and above the uppermost bottom 3a. Present below the lowermost bottom 3h is a discharge funnel 5. Each bottom 3a-3h includes a number of horizontally extending elements 6, which are tiltable in the directions indicated by the arrows P1, P2 about axes 7 extending through said elements 6. The elements 6 of successive bottoms 3a-3h are alternately rotatable in directions indicated by arrows P1, P2.

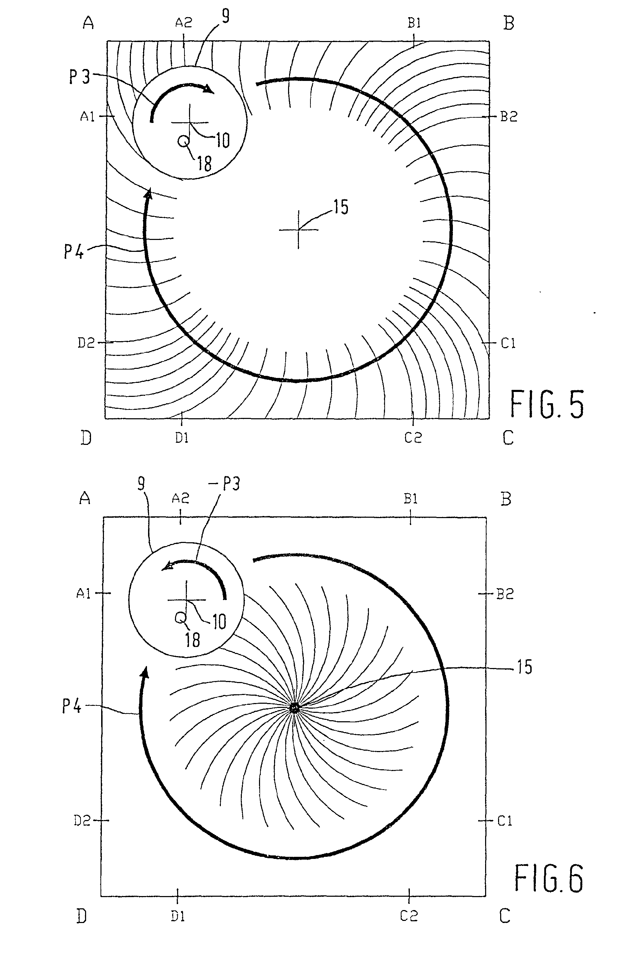

The device 1 furthermore comprises a bulk goods supplying device 8, which includes an horizontally extending plate 9. The plate is circular in shape and extends transversely to a central axis 10. The plate 9 is rotatable about the central axis 10 in the direction indicated by the arrow P3 and in a direction opposed thereto (see Figures 5-7). To this end, the plate 9 is provided with a rod 11 extending along the central axis 10, which is mounted in bearings in a bearing block 12 on a side of the plate 9 remote from the bottom 3a, and which is rotatably connected to a motor 13. The bearing block 12 is mounted in a frame 14, which is rotatably mounted, about an axis of rotation 15, in a bearing block 16. The central axis 11 and the axis of rotation 15 extend parallel to each other in spaced-apart relationship. The bulk goods supplying device 8 furthermore includes a supply pipe 17, which opens above the plate 9 with a first end 18 and which is connected to the frame 14 near the axis of rotation 15 with a second end 19 remote from the first end 18. A supply pipe or feed hopper (not shown), via which the bulk goods are introduced into the second end 19, is disposed above said second end 19.

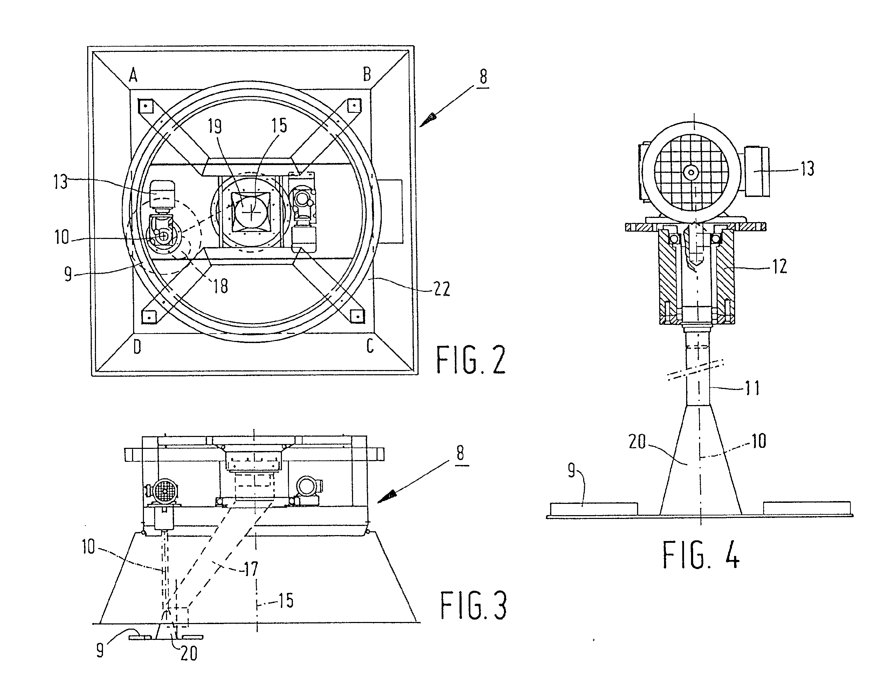

Figures 2 and 3 are a top plan view and a side elevation, respectively, of the bulk goods supplying device 8.

Figure 4 is a front view of the plate 9 in which is rotatable about the central axis 10. As is clearly shown in Figure 4, the plate 9 is provided with a conical element 20 near the central axis 10, which element is connected to the rod 11. The conical elements 20 prevents bulk goods from being deposited on the plate 9 near the central axis 10. The bulk goods that are present at that location will only experience a relatively small force in a direction away from the plate 9 during the rotation of the plate 9, as a result of which the bulk goods will remain on the plate 9 for a relatively long time. If different materials are dried in succession by means of the driving device 1, this might lead to the bulk goods of a preceding drying session being mixed with the bulk goods of the next session, which is undesirable, of course.

The operation of the device 1 will now be explained in more detail with reference to the Figures 1-7.

As already indicated above, bulk goods are carried into the end 19 of the supply pipe 17 in the direction indicated by the arrow P5 via a supply pipe or a feed hopper. At the same time, the frame 14 is rotated about the axis of rotation 15, in the direction indicated by the arrow P4, by means of a motor 21. The supply pipe 17 and the plate 9 are rotated about the axis of rotation 15 together with the frame 14. At the same time the plate 9 is also rotated about the central axis 10, in the direction indicated by the arrow P3, by means of the motor 13. The bulk goods that fall through this supply pipe 17 onto the plate 9 via the first end 18 is flung off the plate 9 in the direction of the outer walls 22 of the chamber 4 as a result of the rotation of the plate 9 in the direction indicated by the arrow P3. In order to ensure that sufficient bulk goods will be deposited also in the corners A-D, the rotational speed of the plate 9 about the central axis 10 in the direction indicated by the arrow P3 is increased as soon as the plate 9 nears a corner A-D. As a result, the force that is exerted on the bulk goods will likewise increase, so that the bulk goods will be flung further away from the plate 9. In addition to that, the rotational speed about the axis of rotation 15 is decreased simultaneously therewith. In Figure 5, throwing lines 23 are shown which indicate swathes in which the bulk goods are distributed. As the figure clearly shows, the lines 23 are located closer together near the corners A-D, which means that the rotational speed about the axis of rotation 15 is lower at those locations. Since the bulk goods are distributed over a larger area to be covered near the corners, however, the amount of bulk goods per unit area will be substantially the same as in the areas between the corners.

As is also clearly shown in Figure 5, the simultaneous rotation of the plate 9 in the direction indicated by the arrows P3 and P4 causes the bulk goods to be distributed in particular over an area spaced from the axis of rotation 15. In order to ensure that a sufficient amount of bulk goods is deposited in the area located near the axis of rotation 15 as well, the direction of rotation of the plate 9 about the central axis 10 is reversed, in which the plate 9 is rotated in the direction indicated by the arrow "-P3" (see Fig. 6). The direction of rotation P4 remains unchanged.

As is clearly shown in Figure 6, in particular the area round the axis of rotation 15 will be provided with bulk goods in this manner.

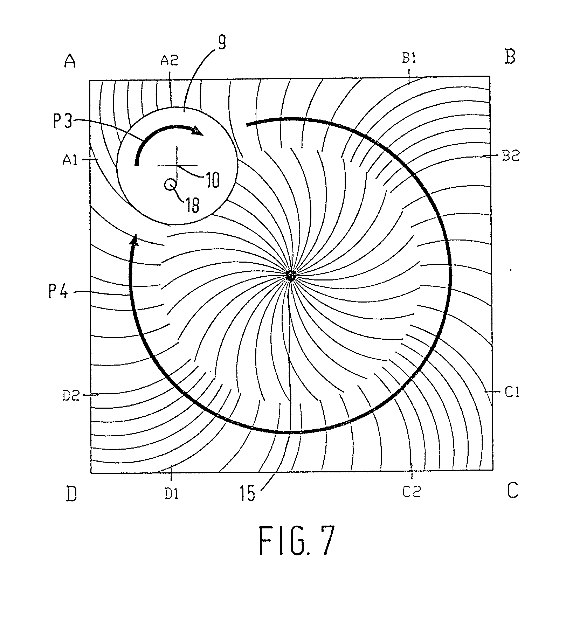

By rotating the plate 9 alternately in the direction indicated by the arrow P3 and in a direction opposed thereto, whilst simultaneously rotating the plate 9 about the axis of rotation 15 in the direction indicated by the arrow P4, a uniform distribution of the bulk goods over the bottom of the chamber 4 will be obtained. This situation is shown in Figure 7. In order to ensure that substantially the same amount of bulk goods per unit area is deposited in the area round the axis of rotation 15 as in the area near the walls 22, the rotational speed in the direction indicated by the arrow P4 is increased when "covering" the area round the axis of rotation 15. As a result, almost as much bulk goods per unit area are deposited on the relatively small area round the axis of rotation 15 as in the area near the walls 22.

After the bulk goods have been deposited on the bottom 3a, air of a desired temperature is passed through the bottom, as a result of which the bulk goods will dry. After a desired period of time, the elements 6 of the bottom 3a will be tilted in the direction indicated by the arrow P1, as a result of which the bulk goods will land on the bottom 3b. The bulk goods will successively land on the bottoms 3c-3h and eventually leave the device 1 via the funnel 5.

It is also possible not to pass air through the bottom 3a, but to use this bottom solely for creating a layer of bulk goods of a relatively constant thickness. As soon as a layer having a predetermined thickness of, for example, 250-300 mm has been deposited on the bottom 3a, the bulk goods will be transferred to the bottom 3b. Only after a number of layers formed on the bottom 3a have been deposited on the bottom 3b will the elements 6 of the bottom 3b be tilted in the direction indicated by the arrow P2, as a result of which the bulk goods will be deposited on the bottom 3c.

It is also possible to use an oval or a rectangular or a differently shaped chamber, in which a uniform distribution of bulk goods over the area to be covered can be obtained by controlling the rotational speeds of the plate about the central axis 10 and the axis of rotation 15.

Instead of using a chamber, it is also possible to deposit the bulk goods on a conveyor belt which can be moved under the supplying device 8.

## Claims

1. A device provided with at least one chamber comprising a bottom for bulk goods to be dried, in which said bottom is provided with means for releasing and closing openings present in the bottom, which device comprises a bulk goods supplying device for supplying bulk goods to the chamber during operation, **characterized in that** the bulk goods supplying device comprises a plate which is rotatable about a central axis, which plate is furthermore rotatable about an axis of rotation being spaced from said central axis and extending parallel thereto, which bulk goods supplying device furthermore comprises means for depositing bulk goods on said plate.

2. A device according to claim 1, **characterised in that** the distance between the central axis and the axis of rotation is larger than the radius of the circular plate.

3. A device according to claim 1 or 2, **characterised in that** the bulk goods supplying device is provided with means for reversing the direction of rotation of the plate about the central axis and/or the axis of rotation.

4. A device according to any one of the preceding claims, **characterised in that** the bulk goods supplying device is provided with means for controlling the rotational speed of the plate about the central axis and/or the axis of rotation.

5. A device according to any one of the preceding claims, **characterised in that** the bulk goods supplying device is disposed in a quadrangular chamber, saod bulk goods supplying device being provided with means for increasing the rotational speed of the plate about the central axis.

6. A device according to any one of the preceding claims, **characterised in that** the means for depositing the bulk goods on the plate comprises a pipe extending in downward direction from the axis of rotation to a position above the plate.

7. A method suitable for supplying bulk goods to a chamber, **characterised in that** the bulk goods to be deposited in the chamber are deposited on a plate which is rotatable about the central axis, which plate is furthermore rotatable about an axis of rotation being spaced from said central axis and extending parallel thereto, wherein bulk goods present on the plate will be flung off the plate and be distributed over the bottom as a result of the rotation of the plate.

8. A method according to claim 7, **characterised in that** the rotational speed of the plate about the central axis and/or the axis of rotation can be controlled.

9. A method according to claim 7 or 8, **characterised in that** the direction of rotation of the plate about the central axis and/or the axis of rotation can be controlled.

10. A method according to any one of the preceding claims 7-9, **characterised in that**, depending on the distance from the plate to a nearby wall of the chamber, the rotational speed of the plate about the central axis can be increased when said distance is relatively large, whilst the rotational speed of the plate about the central axis can be increased when said distance is relatively small.

11. A method according to any one of the preceding claims 7-10, **characterised in that** the rotational speed of the plate about the axis of rotation is relatively high when the bulk goods are being deposited in an area located between the axis of rotation and the central axis, whilst the rotational speed of the plate about the axis of rotation is small when the bulk goods are being deposited on a side of the plate are remote from the axis of rotation.
